# EUROPÄISCHE PATENTSCHRIFT

(11) **EP 0 440 761 B1**
(45) Veröffentlichungstag und Bekanntmachung des Hinweises auf die Patenterteilung: **28.12.1994**
(21) Anmeldenummer: 90911917.4
(22) Anmeldetag: 21.08.1990
(51) Int. Cl.: B67D 3/00

(54) **Behälter mit Vorrichtung zum Entnehmen von flüssigen Medien, wie in Komponenten mischbarer Kunststoffmassen u.a.**
Container with device for extracting fluid media like plastic compounds misciblein components and the like
Recipient avec dispositif pour le prelevement de fluides liquides tels quecomposants de matieres plastiques miscibles et autres

(30) Priorität: 28.08.1989 DE 3928366
(43) Veröffentlichungstag der Anmeldung: 14.08.1991
(73) Patentinhaber: REITERBERGER, Georg, D-83233 Bernau (DE)
(72) Erfinder: REITERBERGER, Georg, D-83233 Bernau (DE)
(74) Vertreter: Merten, Fritz
(86) Internationale Anmeldenummer: DE9000636
(87) Internationale Veröffentlichungsnummer: WO9103419

(56) Entgegenhaltungen:
- EP-A- 0 254 764
- DE-A- 3 819 960
- NO-B- 0 158 014
- SE-C- 0 217 624
- US-A- 0 760 790
- US-A- 1 471 055
- US-A- 2 515 899

## Beschreibung

Die Erfindung betrifft einen Behälter mit Vorrichtung zum Entnehmen von flüssigen Medien, wie in Komponenten mischbarer Kunststoffmassen u. a., mit den Merkmalen des Oberbegriffs des Anspruchs 1.

Es ist allgemein bekannt, div. Flüssigkeiten in Behältern zu lagern und zu transportieren und diese Flüssigkeiten diesen Behältern zu entnehmen, um sie weiteren Verarbeitungsvorgängen zuzuführen. Solche Flüssigkeiten können beispielsweise Kunststoffmassen, Lacke, Verdünnungen, Emulsionen verschiedener Verbindungen o. a. sein. Die meisten derartigen Flüssigkeiten können aggressiv, zum Teil auch giftig oder sonstwie für Mensch und Umwelt unverträglich sein, und sie können, insb. in Verbindung mit dem Luftsauerstoff, unliebsame Reaktionen auslösen, die bis hin zu Katastrophen führen können. Um derartige Auswirkungen solcher Flüssigkeiten möglichst in Grenzen zu halten, werden diese Medien unter Verschluß gelagert, und es werden die zu transportierenden Mengen in Behältern gehalten, die so verschließbar sind, daß Bestandteile dieser Medien nicht unbeabsichtigt nach außen treten können. Obwohl diese Medien in solchen Behältern gelagert und transportiert werden, läßt sich vielfach nicht verhindern, daß beim Entnehmen der Medien oder Zuführen derselben zu weiteren Verarbeitungsvorgängen, insb. beim Umfüllen derselben in andere Apparaturen, erhebliche Mengen an solchen Medien nach außen gelangen und dort zu Schäden an Mensch und Umwelt führen.

Hier setzt die Erfindung ein, der die Aufgabe zugrunde liegt, einen Behälter mit Vorrichtung der eingangs genannten Art dahingehend weiterzubilden, daß sowohl während des Transportes des jeweiligen Mediums im Behälter als auch während des Umfüllens desselben in einen dieses Medium weiter verarbeitenden Apparat keine Bestandteile des Mediums unbeabsichtigt nach außen treten, ferner der Behälter immer wieder verwendbar bleibt und die Entsorgung desselben durch dessen wiederkehrende Verwendbarkeit entfällt sowie der Behälter ein Maximum an Standfestigkeit und Sicherheit gewährleistet.

Diese Aufgabe wird mit den im kennzeichnenden Teil des Anspruchs 1 genannten Merkmalen gelöst.

Erfindungsgemäß ist bei einem Behälter mit Vorrichtung zum Entnehmen flüssiger Medien, bei dem ein an dem Boden des Behälters befindlicher Auslaßstutzen über eine Verbindungsleitung mit einer Förderleitung verbindbar ist, die Verbindungsleitung von zwei teleskopartig ineinander bewegbaren Hülsen gebildet, die konzentrisch zueinander angeordnet und gegeneinander abgedichtet sind. Eine Hülse ist dichtend mit dem Auslaßstutzen, die andere Hülse dichtend mit der Förderleitung verbindbar. Um bei einem Wechsel des Behälters das Ablaufen einer in dem Auslaßstutzen verbliebenen Menge des Mediums zu erleichtern, ist die mit der Förderleitung verbundene Hülse um das Maß des Rauminhaltes des Auslaßstutzens gegen die mit dem Auslaßstutzen verbundene Hülse axial verschiebbar.

Durch diese volumetrische Entspannung der im Auslaßstutzen gestauten Menge an flüssigem Medium wird eine Sogwirkung im Zwischenbereich zwischen Behälter einerseits und Förderleitung andererseits erzeugt, durch die das Medium in seinem gewollten Strömungsfluß begünstigt wird. Hinzu kommt, daß die Vorrichtung so einfach mit dem Auslaßstutzen koppelbar ist, daß insb. bei größeren Behältern der Ankoppel- und Entkoppelungsvorgang auch vollautomatisiert werden könnte, z. B. in der Art, daß beim Einführen des Auslaßstutzens in den offenen Mund der Vorrichtung der den Auslaßstutzen verschließende Hahn automatisch geöffnet und beim Herausheben des Auslaßstutzens aus dem Mund der Vorrichtung dieser Hahn automatisch geschlossen wird.

Ein weiterer Vorteil dieser Vorrichtung kann darin gesehen werden, daß sie ein konstruktiv einfaches Adaptationsstück darstellt, das ohne große Anpassungen an Behältern verschiedener Konfigurationen eingesetzt werden könnte. Durch die Anwendung dieser Vorrichtung lassen sich zudem erhebliche Mengen an Medien einsparen, da diese nicht ins Freie gelangen, wo sie mit dem Luftsauerstoff oder anderen Medien in Verbindung treten und dadurch unbrauchbar werden. Diese lekagefreie Überführung der Medien aus dem jeweiligen Behälter in die Förderleitung hat zudem den Vorteil, daß die oft aggressiven Medien keine Schäden an den Peripherieanlagen anrichten oder zu Explosionen u. a. führen können. Das Übernehmen des jeweiligen Mediums aus dem Behälter mittels der Vorrichtung hat ferner den Vorteil, daß die Behälter als sogenannte Mehrwegebehälter ausgeführt werden können, was im Hinblick auf deren Entsorgung einerseits und der Anwendung edler Metalle sich sehr kostengünstig auswirkt.

Erfindungsgemäß sind die teleskopartig ineinander bewegbaren Hülsen konzentrisch zueinander angeordnet und mittels mindestens einer Dichtung gegeneinander abgedichtet.

Dadurch, daß die teleskopierbaren Hülsen auch gegeneinander abgedichtet sind, wird sichergestellt, daß auch aus der Vorrichtung keine Leckagen an Medium austreten können, wodurch die leckfreie Kette von Behälter zur Förderleitung auch an der Vorrichtung erhalten bleibt.

Vorteilhafte Weiterbildungen der Erfindung können insb. den abhängigen Ansprüchen entnommen werden.

In der Zeichnung ist ein Ausführungsbeispiel der Erfindung schematisch dargestellt. Es zeigt:

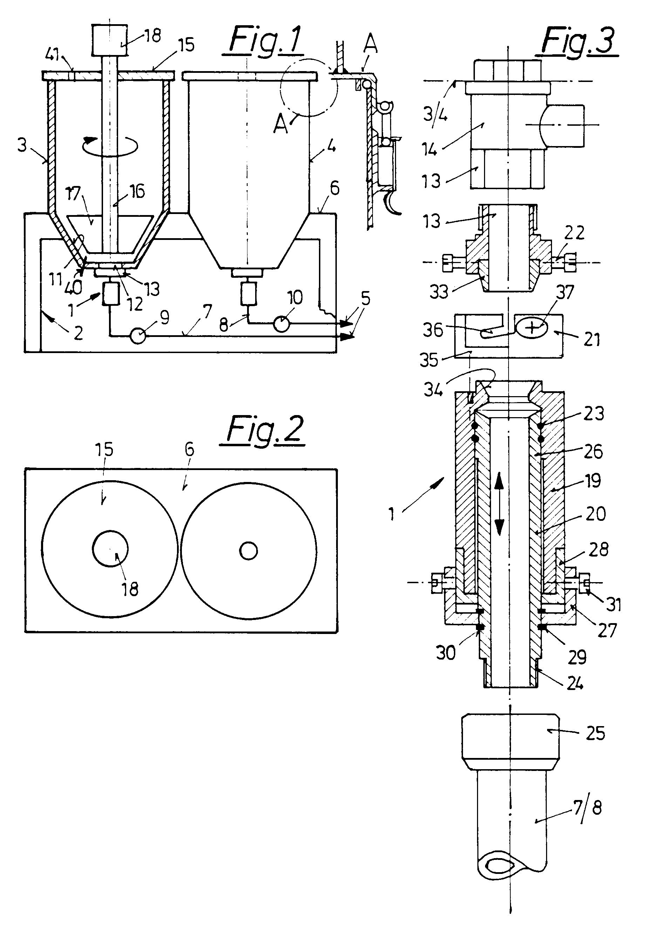

- Fig. 1: eine Ansicht auf eine Dosieranlage mit zwei unterschiedliche Medien enthaltenden Behältern für zwei verschiedene Komponenten an Kunststoffmassen und die Vorrichtung in Ansicht, wobei ein Behälter längsseits aufgeschnitten ist,
- Fig. 2: eine Draufsicht auf die Dosieranlage nach Fig. 1.
- Fig. 3: einen explosionsartig gezeichneten Längsmittelschnitt durch die Vorrichtung, bei der auch die Anschlüsse am Behälter und Leitung dargestellt sind.

Die Erfindung wird am Beispiel ihrer Anwendung bei einer Dosieranlage 2 für zwei miteinander zu mischende Kunststoffmassen dargestellt und erläutert. Dies schließt natürlich nicht aus, die Vorrichtung 1 auch für andere Anwendungsfälle zu benutzen, bei denen es darauf ankommt, den Austritt von Medien auf deren Weg aus einem Behälter 3, 4 zu einer das Medium weiterverarbeitenden Apparatur 5 ins Freie zu verhindern.

Die Dosieranlage 2, die hier für zwei unterschiedliche Kunststoffmassen ausgelegt ist, besteht aus den zwei auf einer Tragkonstruktion 6, z. B. einer Tischplatte, aufgesetzten Behältern 3, 4, von denen der eine Behälter 3 die eine Komponente der Masse und der andere Behälter 4 die andere Komponente enthält. Zwischen jedem dieser Behälter 3, 4 und einer Austrittsstelle für das jeweilige Medium sind Förderleitungen 7, 8 wie auch die Medien durch diese fördernde Pumpen 9, 10 vorgesehen, von denen letztere, je nach Viskosität oder gefordertem Austrittsdruck der jeweiligen Kunststoffmasse auch als Hochdruckpumpen ausgeführt sein können. Jeder Behälter 3, 4, der z. B. zylindrisch ausgeführt sein kann, weist einen vorzugsweise trichterförmigen Boden 11 auf, der an seiner tiefsten Stelle eine Öffnung 12 für den Anschluß eines Auslaßstutzens 13 beinhaltet. In dieser Öffnung 12 ist der Auslaßstutzen 13 dichtend angeschlossen, z. B. verschraubt, und es weist dieser Auslaßstutzen zwischen seinem frei auskragenden Ende und dem Boden 11 des Behälters 3, 4 einen Hahn 14, z. B. in Form eines Kugelhahnes, für das Abschließen des Auslaßstutzens 13 auf. Das dem Boden 11 abgewandte Ende des Behälters 3, 4 ist mit einem Deckel 15 hermetisch verschließbar, und es kann durch diesen Deckel eine Abtriebswelle 16 eines ein Rührwerk 17 bewegenden Antriebs 18 geführt sein. Das Rührwerk 17, das als Schabflügel ausgeführt sein kann, ist der Schräge des Bodens 11 angepaßt, so daß durch dieses die jeweilige Kunststoffmasse zur Öffnung 12 im Boden 11 gefördert und von da in den Auslaßstutzen 13 geleitet wird.

Die Vorrichtung 1 wird von zwei konzentrisch ineinander angeordneten und gegeneinander teleskopierbaren Hülsen 19, 20 gebildet, von denen die äußere Hülse 19 an ihrem dem Auslaßstutzen 13 zugewandten Ende mit einem Rastglied 21 verbunden ist, über das diese Hülse und damit auch die Vorrichtung an Rastmitteln 22 des Auslaßstutzens ankoppelbar ist. Die andere, d. h. die innere Hülse 20, ist in der äußeren Hülse 19 gleitend geführt, und es sind diese Hülsen mittels mindestens einer Dichtung 23 gegeneinander abgedichtet. Diese innere Hülse 20 weist an ihrem dem Rastglied 21 abgewandten Ende vorzugsweise ein Gewinde 24 auf, über das dieses Ende mit der Schlauchverschraubung 25 einer Förderleitung 7 oder 8 verbindbar ist. Die Förderleitung 7, 8 kann dabei als Rohr oder Schlauch ausgeführt sein, über die der Behälter 3, 4 an der jeweiligen Förderpumpe 9, 10 für das Medium angeschlossen wird.

Zusätzlich zu der Abstützung der inneren Hülse 20 gegen die äußere Hülse 19 über die Dichtung 23 einerseits und einen im Bereich der Dichtung an der Hülse 20 vorgesehen Ringwulst 26 ist diese innere Hülse 20 im Bereich ihres der Förderleistung 7, 8 zugewandten Endes abermals gegen die äußere Hülse 19 abgestützt, wobei diese Abstützung vorzugsweise über den Boden einer topfförmigen Muffe 27 erfolgt. Diese Muffe 27 ist wiederum zylindrisch ausgeführt und umgreift eine weitere, um die innere Hülse 20 konzentrisch angeordnete, zweite Muffe 28, die einerseits auf der inneren Hülse gleitend geführt und andererseits auf der äußeren Hülse 19 feststellbar ist. Die äußere Muffe 27, welche die innere Hülse 20 konzentrisch umschließt, ist mit ihrem Boden auf der inneren Hülse fixiert, wobei die Fixierung dadurch erfolgt, daß koaxial zum Boden dieser äußeren Muffe Spannringe 29 in Nuten 30 der inneren Hülse 20 eingespannt sind. Mit diesen Spannringen 29 bleibt die äußere Muffe 27 in axialer Richtung gehalten, in Drehrichtung dagegen kann sie sich frei bewegen.

Um den Hub der inneren Hülse 20 in der äußeren Hülse 19 festzulegen, ist an der äußeren Muffe 27 mindestens eine Stellschraube 31 angebracht, und es können auf der inneren, zweiten Muffe 28 Raststellen für diese Schraube vorgesehen sein. Auf diese einfache Weise kann der Hub der inneren Hülse 20 so bemessen werden, daß beim Absenken der inneren Hülse in der sie umschließenden äußeren Hülse 19 ein Raumvolumen geschaffen wird. Die Größe der Absenkung der inneren Hülse 20 und das dadurch entstehende Raumvolumen kann der Menge an Medium, die sich zwischen dem freien Ende des Auslaßstutzens 13 und dem Hahn 14 anstaut, angepaßt werden. Auf diese Weise entsteht ein sogenannter Entspannungsraum für das Medium, so daß dieses nicht aus der Verbindung zwischen Auslaßstutzen 13 und Förderleitung 7, 8 entweichen kann.

Um die Anpassung des Auslaßstutzens 13 an den offenen Mund der Vorrichtung 1 leckagenlos vorzunehmen, ist das freie Ende des Auslaßstutzens mit einer Dichtung 33, z. B. in Form eines Kegels, versehen, und es ist der Mund der äußeren Hülse 19 der Vorrichtung 1 mit einer diesem Kegel angepaßten Ausdrehung 34 ausgestattet. Ein Kuppelstück, d. h. das Rastglied 21, welches die Vorrichtung 1 mit dem Auslaßstutzen 13 verbindet, ist an der Stirnseite der äußeren Hülse 19 fest, mittels Schrauben 35, befestigt und weist an seinem Mantel bajonettförmige Schlitze 36 auf, die über die Rastmittel 22 am Auslaßstutzen 13 formschlüssig einrasten. Damit ist die erste Verbindung der Vorrichtung 1 am Auslaßstutzen 13 sichergestellt. Die andere Verbindung der Vorrichtung 1 an der Förderleitung 7 oder 8 kann eine ähnliche Bajonettverbindung oder wie in der Zeichnung dargestellt, die Schlauchverschraubung 25 sein.

Die Handhabung der Vorrichtung 1 ist ausgesprochen einfach und sicher und kann, meist auch ohne Spezialwerkzeuge, von jedermann bedient werden.

Bei Anwendung der Vorrichtung 1 bei einer in der Zeichnung angedeuteten Dosieranlage 2 kann die Vorrichtung, z. B. auf der Tischplatte 6 so angebracht sein, daß der jeweilige Behälter 3, 4 auf diese abgesenkt wird, wobei das freie Ende des Auslaßstutzens 13 in das offene Maul der äußeren Hülse 19 mit dessen kegelförmigen Dichtung 33 kraftschlüssig eingreift. Sobald diese Verbindung von Auslaßstutzen 13 und äußerer Hülse 19 hergestellt ist, kann das Rastglied 21 an den Auslaßstutzen angekoppelt werden.

Analog dem Aufsetzen des Behälters 3, 4 bzw. Einsetzen dessen Auslaßstutzens 13 in die Vorrichtung 1 läuft auch der Abhebevorgang des Behälters von dieser Vorrichtung ab, wobei in diesem Fall der Auslaßstutzen aus der Vorrichtung austaucht.

Die Verarbeitung des jeweiligen Mediums erfolgt in der Weise, daß dieses mittels der Pumpe 9 oder 10, vorzugsweise einer Hochdruckpumpe, in einen das Medium verarbeitenden Apparat 5, bei Kunststoffmassen z. B. in eine Form, bei gasförmigen Medien in eine Beblasungsapparatur u. a., gefördert wird. Bei entsprechender Zumischung des Mediums mit anderen Komponenten kann dies in entsprechenden Verarbeitungsapparaturen, wie sie vielfach bekannt sind, geschehen.

Die Vorrichtung 1 ist geeignet, überall dort eingesetzt zu werden, wo insb. aggressive und/oder Mensch und Umwelt schädigende Stoffe verarbeitet werden. Diese können neben der Verarbeitung von Kunststoffmassen, wie etwa im Modell- oder Industriebau, in Lackieranlagen und sonstigen, auch in anderen, insb. kommerziellen Abfüllanlagen sein, wie sie in der Praxis vielfach vorkommen.

Um insb. solche, als pastöse Massen vorliegende Medien möglichst vollkommen aus dem jeweiligen Behälter zu entnehmen, kann dieser auch mit dem Rührwerk 16 bis 18 ausgestattet sein, dessen Rührflügel dem Boden 11 des Behälters angepaßt und über die Abtriebswelle 16 des Antriebes 18, von letzterem bewegbar ist.

In Fällen, in denen der Füllstand des jeweiligen Behälters 3 oder 4 nach außen angezeigt werden soll, ist es möglich im Bereich des Bodens 11 des Behälters eine Füllstandsüberwachung 40 vorzusehen. Diese könnte aus einem auf Druck ansprechenden Sensor bestehen, wie er für ähnliche Anwendungen handelsüblich ist. Ebenso könnte der Deckel 15 des Behälters 3 und/oder 4 mit einem Belüftungsventil 41 versehen sein, um den Austritt des oft nicht unter Druck stehenden Mediums im Behälter zu begünstigen.

## Patentansprüche

1. Behälter (3, 4) mit Vorrichtung zum Entnehmen von flüssigen Medien, wie in Komponenten mischbaren Kunststoffmassen u. a.,
wobei der Behälter (3, 4) an seinem Boden einen abschließbaren Auslaßstutzen (13) für das Entnehmen des jeweiligen Mediums aufweist,
und dieser Auslaßstutzen (13) über die Verbindungsleitung (1) mit mindestens einer Förderleitung (7, 8) für das zu einer Verarbeitung führbare Medium verbindbar ist,
**dadurch gekennzeichnet**,
daß die Verbindungsleitung (1) von zwei teleskopartig ineinander bewegbaren Hülsen (19, 20) gebildet wird, welche konzentrisch zueinander angeordnet und mittels mindestens einer Dichtung (23) gegeneinander abgedichtet sind,
daß eine Hülse (19) dichtend mit dem Auslaßstutzen (13) und die andere Hülse (20) dichtend mit der Förderleitung (7, 8) verbindbar ist,
und daß die mit der Förderleitung (7, 8) verbundene Hülse um das Maß des Rauminhaltes des Auslaßstutzens (13) gegen die mit dem Auslaßstutzen (13) verbundene Hülse (19) axial verschiebbar ist.

2. Behälter nach Anspruch 1,
**dadurch gekennzeichnet**,
daß die Verbindung der Hülse (19) mit dem Auslaßstutzen (13) eine Bajonettverbindung und die Verbindung der Hülse (20) mit der Förderleitung (7, 8) eine Schraubverbindung ist.

3. Behälter nach Anspruch 1,
**dadurch gekennzeichnet**,
daß die Dichtung zwischen dem Auslaßstutzen (13) und der Hülse (19) durch einen Dichtkonus (33) des Auslaßstutzens (13) in einer Ausdrehung (34) der Hülse (19) bewirkt wird.

4. Behälter nach Anspruch 1,
**dadurch gekennzeichnet**,
daß auf der mit der Förderleitung (7, 8) verbundenen Hülse (20) außerhalb der mit dem Ablaßstutzen (13) verbundenen Hülse (19) eine topfförmige Muffe (27) drehbar abgestützt ist,
und daß diese Muffe (27) eine weitere, auf der mit dem Ablaßstutzen (13) verbundenen Hülse (19) abgestützte Muffe (28) konzentrisch umgreift.

5. Behälter nach Anspruch 4,
**dadurch gekennzeichnet**,
daß die Muffen (27, 28) mittels einer Stellschraube (31) gegeneinander fixierbar sind.

## Claims

1. A container (3,4) with device for extracting fluid media like plastic compounds miscible in components and the like, whereby the container (3,4) comprises at its base a closable outlet union (13) for the extraction of the particular medium and whereby this outlet union (13) may be connected via the connecting pipe (1) to at least one feed-pipe (7,8) for the medium to be conveyed towards further processing, characterised in that the connecting pipe (1) is constructed of two sleeves (19,20) which can be moved telescopically inside one another and sealed off against one another by at least one sealing gasket (23); that one sleeve (19) may be connected under seal to the outlet union (13) and the other sleeve (20) may be connected under seal to the feed-pipe (7,8); and that the sleeve connected to the feed-pipe (7,8) is axially adjustable against the sleeve (19) connected to the outlet union (13) by movement around the dimensional extremities of the internal space within the outlet union (13).

2. A container according to claim 1, characterised in that the connection of the sleeve (19) to the outlet union (13) is a bayonet connection and the connection of the sleeve (20) to the feed-pipe (7,8) is a screw connection.

3. A container according to claim 1, characterised in that the seal between the outlet union (13) and the sleeve (19) is effected by means of a sealing taper sleeve (33) of the outlet union (13) within a locating recess (34) of the sleeve (19).

4. A container according to claim 1, characterised in that, adjustably supported on the sleeve (20) which is connected to the feed-pipe (7,8) and outside the sleeve (19) which is connected to the outlet union (13), there is a pot-shaped coupling socket (27); and in that this coupling socket (27) concentrically engages around a further coupling socket (28) supported on the sleeve (19) which is connected to the outlet union (13).

5. A container according to claim 1, characterised in that the coupling sockets (27,28) are fixed against each other by means of a set-screw (31).

## Revendications

1. Récipient (3, 4) comportant un dispositif de prélèvement de fluides liquides, tels que composants de matières plastiques miscibles et autres, ledit récipient (3, 4) présentant, en son fond, une tubulure de décharge (13) obturable, pour le prélèvement du fluide concerné, la tubulure de décharge (13), précitée, venant se connecter par la tubulure de raccordement (1) à au moins une conduite de transvasement (7, 8) pour le fluide devant être acheminé en vue de son traitement, récipient caractérisé en ce que la tubulure de raccordement (1) est matérialisée par deux douilles (19, 20) mobiles l'une dans l'autre à la manière d'un télescope, lesquelles sont agencées concentriquement l'une à l'autre, et étanchées par au moins un joint d'étanchéité (23), en ce qu'une douille (19) est raccordée hermétiquement à la tubulure de décharge (13), et l'autre douille (20) est raccordée hermétiquement à la conduite de transvasement (7, 8), et en ce que la douille raccordée à la conduite de transvasement (7, 8) peut se déplacer axialement par rapport à la douille (19) raccordée à la tubulure de décharge (13), d'une valeur correspondant à un volume de ladite tubulure de décharge (13).

2. Récipient suivant la revendication 1, caractérisé en ce que le raccord de la douille (19) à la tubulure de décharge (13) est un raccord à baïonnette, et le raccord de la douille (20) à la conduite de transvasement (7, 8) est un raccord fileté.

3. Récipient suivant la revendication 1, caractérisé en ce que l'étanchéité entre la tubulure de décharge (13) et la douille (19) est assurée par un joint conique (33) de la tubulure de décharge (13) qui s'engage dans un alésage (34) de la douille (19).

4. Récipient suivant la revendication 1, caractérisé en ce qu'un manchon (27) en forme de godet vient en appui, avec une aptitude à la rotation, sur la douille (20) raccordée à la conduite de transvasement (7, 8), à l'extérieur de la douille (19) raccordée à la tubulure de décharge (13), et en ce que ce manchon (27) enveloppe, concentriquement, un autre manchon (28), en appui sur la douille (19) raccordée à la tubulure de décharge (13).

5. Récipient suivant la revendication 4, caractérisé en ce que les manchons (27, 28) peuvent être solidarisés au moyens d'une vis de réglage (31).
